Europäisches Patentamt

European Patent Office

Office européen des brevets

(19)

(11) Publication number: **0 433 165 A1**

# (12) EUROPEAN PATENT APPLICATION

(21) Application number: **90403535.9**

(22) Date of filing: **11.12.90**

(51) Int. Cl.⁵: **G11B 21/10, G11B 5/596**

(30) Priority: **11.12.89 JP 318744/89**

(43) Date of publication of application:
**19.06.91 Bulletin 91/25**

(84) Designated Contracting States:
**DE FR GB**

(71) Applicant: **SONY CORPORATION**
7-35, Kitashinagawa 6-chome Shinagawa-ku
Tokyo (JP)

(72) Inventor: **Kawabata, Tomoki**
c/o Sony Corporation, 7-35, Kitashinagawa
6-chome
Shinagawa-ku, Tokyo (JP)
Inventor: **Nakamura, Hisashi**
c/o Sony Corporation, 7-35, Kitashinagawa
6-chome
Shinagawa-ku, Tokyo (JP)

(74) Representative: **Thévenet, Jean-Bruno et al**
Cabinet BEAU DE LOMENIE 55 rue
d'Amsterdam
F-75008 Paris (FR)

(54) Magnetic disc recording apparatus and magnetic disc playback apparatus.

(57) A magnetic disk recording apparatus according to this invention controls a pulse width of a recording signal in dependency upon a pattern of coded record data and a head (2) position to thereby suppress a peak shift of a playback signal.

Further, a magnetic disk recording apparatus according to this invention individually controls preceding and succeeding change positions of a recording signal in dependency upon a pattern of coded record data and a head (2) position to thereby suppress a peak shift of a playback signal.

In addition, a magnetic disk playback apparatus according to this invention controls an equalization characteristic of an equalizer in dependency upon a head (2) position to thereby suppress a peak shift of a playback.

FIG. 6

EP 0 433 165 A1

## MAGNETIC DISC RECORDING APPARATUS AND MAGNETIC DISC PLAYBACK APPARATUS

### Background of the Invention

### Field of the invention

This invention relates to a magnetic disc recording apparatus and a magnetic disc playback apparatus.

### Prior art

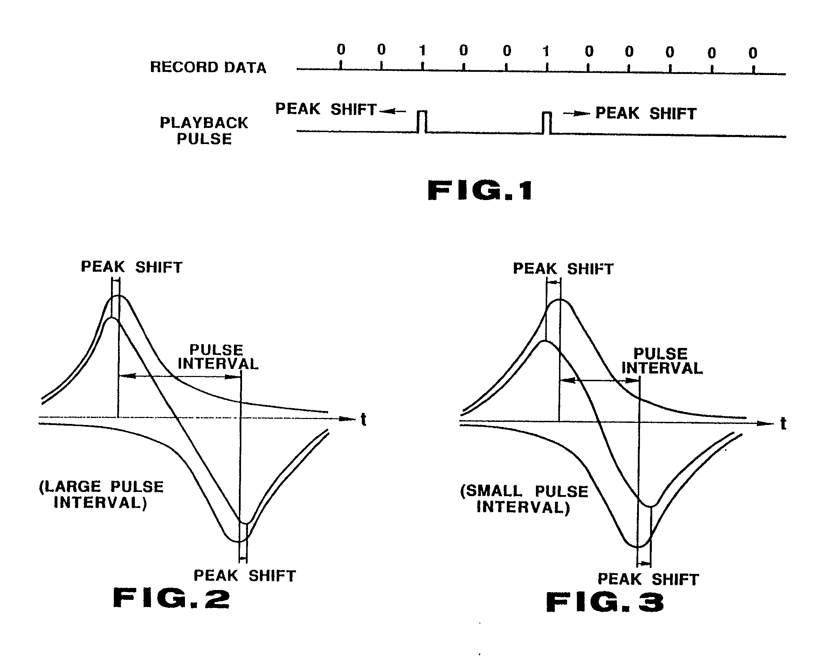

So called RLL (Run Length Limited) code in which the maximum inversion interval of a waveform train is definite, e.g., RLL 2,7 code widely employed in magnetic disc apparatuses (magnetic disc recording apparatuses and magnetic disc playback apparatuses), etc. is a variable length code of i = 2, 3, 4 based on a system of converting i bits of input data to record data of 2i bits, wherein two bit information 0 in coded record data are successive at the minimum and seven information 0 are successive at the maximum (minimum run of so called 0 is 2, and maximum run thereof is 7). In the magnetic disc apparatus, so called a NRZI (Non Return to Zero Inverted) modulation for inverting the direction of a magnetic field of the head when the bit information represents "1" is implemented to the record data to generate a recording signal to record this signal onto the magnetic disc. Namely, the magnetization reversal interval formed on a recording medium of the magnetic disc is proportional to the length indicating that bit information 0 are successive of the record data, and becomes minimum when the pattern of the coded record data is in correspondence with a pattern indicated by "1001" as shown in FIG. 1.

Attention is now drawn to the case where a signal recorded as magnetization reversal of a recording medium of a magnetic disc is played back. In a playback signal from the head, there is produced so called a peak shift such that a peak position of a playback signal shifts by the intercode interference, for example, as shown in FIGS. 2 and 3. As a result, as shown in FIG. 1, in adjacent playback pulses, the preceding pulse shifts further in a forward direction, and the succeeding pulse shifts further in a backward direction. As shown in FIG. 3, according as the magnetization reversal interval, i.e., the pulse interval of the record data becomes narrower, the shift quantity becomes larger. For example, in a magnetic disc rotationally driven at a constant angular velocity, the relative speed with respect to the recording medium of the head becomes slower according as the distance from the inner circumferential side of the magnetic disc becomes small, resulting in narrow pulse width of the recording signal. For this reason, according as the head position becomes closer to the inner circumferential side of the magnetic disc, the peak shift quantity becomes larger.

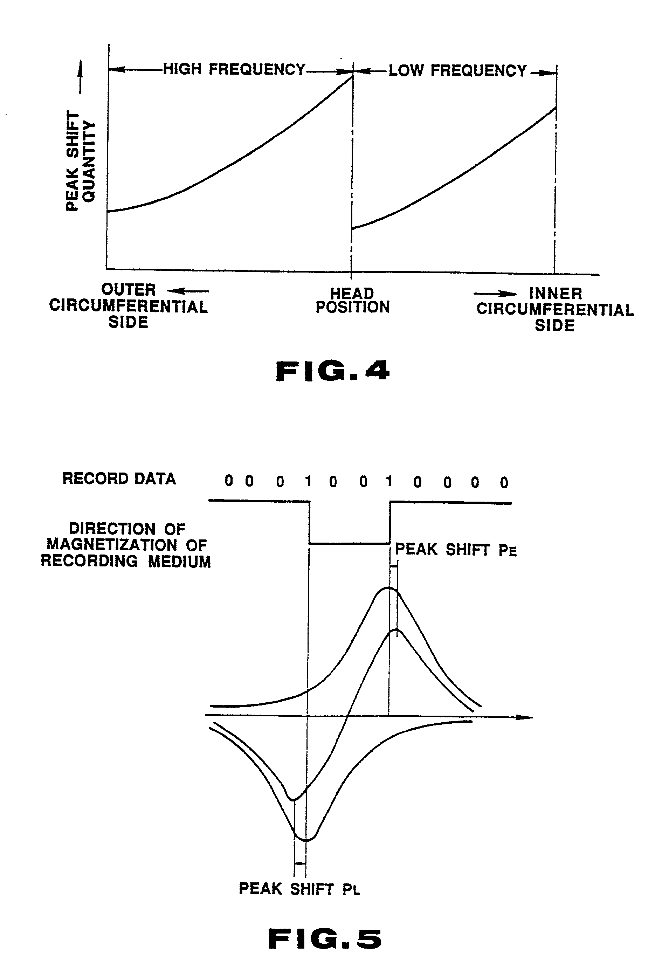

As an apparatus aiming at an improvement in the recording density, as shown in FIG. 4, there is known a magnetic disc apparatus adapted in which the data recording area of the magnetic disc is divided into, e.g., two areas on the outer and inner circumferential sides to allow the outer circumferential side where the realtive speed of the head with respect to the recording medium is fast to have a high recording frequency, and to allow the inner circumferential side to have a low recording frequency. Also in such a magnetic disc apparatus, as shown in FIG. 4, according as the distances from the inner circumferential sides in respective areas become smaller, the pulse width of the recording signal becomes narrower, and the peak shift quantity becomes larger. Further, as shown in FIG. 4, the peak shift quantity at the innermost circumferential portion in the high frequency area where the recording frequency is high becomes larger than the peak shift quantity at the outermost circumferential portion in the low frequency area.

Meanwhile, in the prior art, in order to lessen a peak shift due to intercode interference as described above, correction of peak shift as described below is conducted at the times of recording and playback.

At the time of recording, an approach is employed to discriminate a pattern of record data which has been subjected to BLL 2,7 coding to shift the write timing in a direction decreasing the peak shift quantity when a pattern causing a large peak shift, e. g., a pattern of "1001", e. g., as shown in FIG. 1 is detected. On the other hand, at the time of playback, e.g., so called a cosine equalizer is used to remove the hem portion of a playback signal waveform, thus to reduce a peak shift quantity. In other words, the playback signal waveform is caused to be sharp, thus to eliminate intercode interference.

As stated above, since the peak shift correction carried out at the time of recording is such that only pattern information of record data is used to make a suitable correction, e. g., at the innermost circumferential portion of the magnetic disc, the peak shift correction is excessively carried out on the outer circumferential side of the magnetic disc where the bit density is low and the resolution is high, resulting in the problem of a lowered phase margin. Further, in the case of the peak shift in a magnetic disc, as shown in FIG. 4, to divide the data area of the magnetic disc into areas on the outer and inner circumferential sides thus to use two recording frequencies, an approach is employed to make a suitable correction at the innermost circumferential portion in a high frequency area. For this reason, the peak shift correction is excessively carried out on the outer circumferential side in the high frequency area and on the inner circumferential side in the low frequency area, resulting in the problem of a lowered phase margin. Further, for the waveform equalization carried out at the time of playback, a method of controlling only a gain of a cosine equalizer in dependency upon a recording frequency is used. In other words, a method of controlling the gain of a cosine equalizer in dependency upon a head position, and/or a method of controlling a delay quantity of a cosine equalizer in dependency upon a head position or a recording frequency are not employed. Namely, an optimum correction is not carried out.

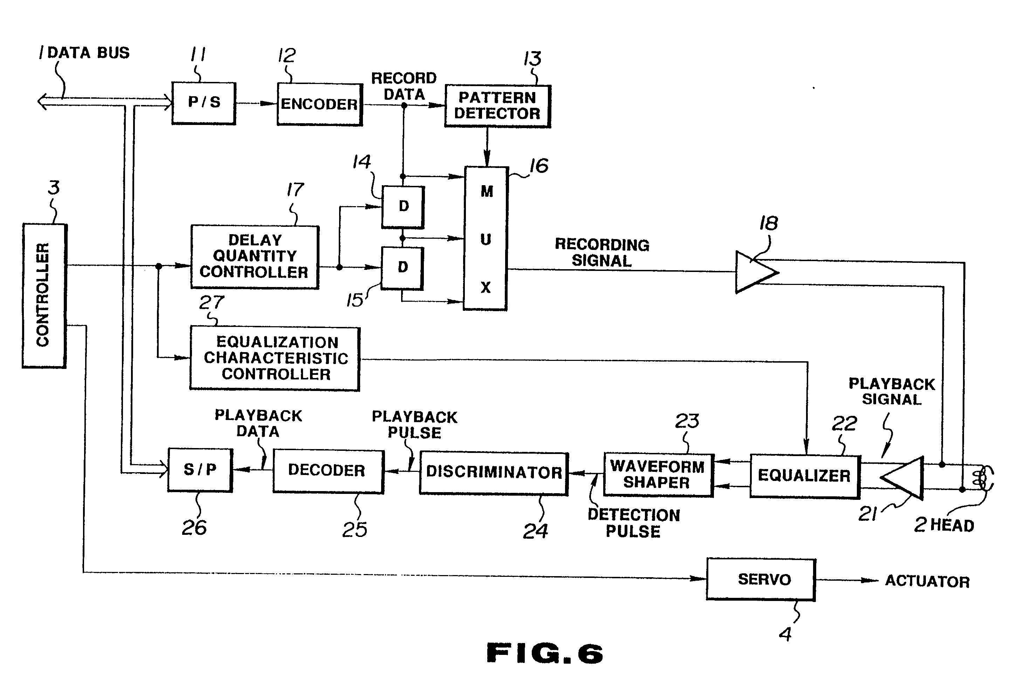

Further, by the effect that magnetization of a preceding recording medium is partially erased by a succeeding reversed magnetization, and/or the interference effect between reversed magnetizations by the demagnetization field, as shown in FIG. 5, a peak shift quantity $P_L$ of a playback signal played back from the preceding reversed magnetization becomes larger than a peak shift quantity $P_E$ of a playback signal played back from the succeeding reversed magnetization. With the conventional disc apparatus, however, this point was not taken into consideration by any means. Namely, as shown in FIG. 5, even in the case where the preceding peak shift quantity $P_L$ and the succeeding peak shift quantity $P_E$ are different to much degree, correction of the same quantity is applied to the preceding peak shift and the succeeding peak shift. As a result, the peak shift correction with respect to the preceding peak shift becomes insufficient, and the peak shift correction with respect to the succeeding peak shift becomes excessive, resulting in insufficient reduction effect of the peak shift. Also, in accordance with actual experiments, it is confirmed that there are errors by the preceding peak shift to an overwhelming degree.

## Objects and Summary of the Invention

With the above actual circumstances in view, this invention has been made, and its object is to provide a magnetic disc recording apparatus adapted to control the pulse width of a recording signal on the basis of a pattern of record data and a head position to thereby suppress a peak shift of a playback signal in playback, thus making it possible to sufficiently ensure a phase margin, and to reduce the error rate.

Another object of this invention is to provide a magnetic disc recording apparatus adapted to individually control preceding and succeeding positions of pulses of a recording signal on the basis of a pattern of record data and a head position to control a pulse width of the recording signal to thereby suppress more properly a peak shift of a playback signal in playback, thus making it possible to sufficiently ensure a phase margin, and to reduce the error rate.

A further object of this invention is to provide a magnetic disc playback apparatus adapted to control the equalization characteristic of an equalizer on the basis of a head position to carry out an optimum peak shift correction, thereby making it possible to sufficiently ensure a phase margin at the time of playback, and to reduce the error rate.

A magnetic disc recording apparatus according to this invention comprises, a head for recording signals on a magnetic disc, a controller serving as head position control means for controlling a position in a disc radial direction of the head, a pattern detector serving as pattern detection means for detecting a pattern of record data in which a peak position of a playback signal shifts, delay elements to a delay quantity controller serving as pulse width control means for controlling a pulse width of a recording signal delivered to the head in dependency upon head position information from the controller and pattern information from the pattern detector, wherein the delay elements to the delay quantity controller carry out a control to allow a pulse width of the recording signal to be narrower according as the head position becomes closer to the inner circumferential side on the basis of head position information from the controller so that a peak shift quantity of a playback signal is reduced with respect to record data of a pattern that a peak shift detected by the pattern detector generates, thereby to solve the above-mentioned problems.

Further, a magnetic disc recording apparatus according to this invention comprises a head for recording signals onto a magnetic disc, a controller serving as head position control means for controlling a position in a radial direction of the head, a pattern detector serving as pattern detection means for detecting a pattern of record data in which a peak position of a playback signal shifts, and delay elements to a delay quantity controller serving as pulse width control means for individually controlling preceding and succeeding change positions of pulses of a recording signal delivered to the head in dependency upon head position information from the controller and pattern information from the pattern detector to control a pulse width of the recording signal, wherein the delay elements to the delay quantity controller carry out a control to allow a pulse width of the recording signal to be narrower to individually effect a control to delay the preceding change position of pulses of the recording signal and to advance the succeeding change position thereof according as the head position becomes closer to the inner circumferential side on the basis of head position information from the controller so that a peak shift quantity of a playback signal is reduced with respect to the record data of a pattern that a peak shift detected by the pattern detector generates, thereby to solve the above-described problems.

In addition, a magnetic disc playback apparatus according to this invention comprises a head for playing back signals from a magnetic disc, an equalizer in which an equalization characteristic for carrying out a waveform equalization of a playback signal from the head is changeable, a controller serving as head position control means for controlling a position in a disc radial direction of the head, and an equalization characteristic controller serving as equalization characteristic control means for controlling the equalizer so that the peak shift quantity of the playback signal is decreased in dependency upon head position information from the controller, thereby to solve the above-mentioned problems.

## Brief Description of the Drawings

FIG. 1 is a diagram showing the relationship between record data and playback pulses,

FIGS. 2 and 3 are diagrams showing the relationship between the pulse interval and the peak shift, respectively,

FIG. 4 is a diagram showing the relationship between the head position and the peak shift,

FIG. 5 is a diagram showing a difference between peak shift quantities at preceding and succeeding change positions of pulses of a recording signal,

FIG. 6 is a circuit diagram showing, in a block diagram, the essential part of a magnetic disc apparatus of a first embodiment to which a magnetic disc recording apparatus and a magnetic disc playback apparatus according to this invention are applied,

FIG. 7 is a diagram showing the relationship between the head position and the peak shift correction quantity,

FIG. 8 is a waveform diagram for explaining the principle of an equalizer, and

FIG. 9 is a circuit diagram showing, in a block form, the essential part of the recording system of a magnetic disc apparatus of a second embodiment to which a magnetic disc recording apparatus according to this invention is applied.

## Detailed Description of the Preferred Embodiments

Preferred embodiments of a magnetic disc recording apparatus and a magnetic disc playback apparatus according to this invention will now be described with reference to the attached drawings.

FIG. 6 is a circuit diagram showing, in a block form, the essential part of a magnetic disc apparatus of a first embodiment to which the magnetic disc recording apparatus and the magnetic disc playback apparatus according to this invention are applied. Namely, the recording system and the playback system of the magnetic disc apparatus are both shown in FIG. 6.

In FIG. 6, the recording system of the magnetic disc apparatus comprises a P/S converter 11 for converting parallel input data inputted through a data bus 1 to serial data, an encoder 12 for converting the serial data to, e.g., a RLL 2,7 code, a pattern detector 13 for discriminating a pattern of the record data converted to RLL 2,7, code to control a MUX 16, two delay elements 14 and 15 having a variable delay quantity connected in series for delaying the record data converted to RLL 2,7 code, the MUX 16 for selecting one data from data from the the encoder 12 and delay elements 14 and 15 to allow the selected data to be subjected to, e.g., NRZI modulation to use it as a recording signal, a drive amplifier 18 for driving the head 2 by the recording signal, and a delay quantity controller 17 for controlling delay quantities of the delay elements 14 and 15 on the basis of head position information from the controller 3.

The playback system of the magnetic disc apparatus comprises a playback amplifier 21 for amplifying a signal from the head 2, an equalizer 22 in which the equalization characteristic for implementing waveform equalization to a playback signal from the playback amplifier 21 is changeable, a waveform shaper 23 for shaping the equalized waveform to generate a detection pulse indicating presence and absence of a signal, a discriminator 24 for discriminating the detection pulse to generate a playback pulse, a decoder 25 for decoding the playback pulse to generate serial playback data, a S/P converter 26 for converting the serial playback data to parallel data, and an equalization characteristic controller 27 for controlling the equalization characteristic of the equalizer 22 on the basis of head position information from the controller 3.

In this embodiment, the controller 3 has a function to drive and control an actuator to which the head 2 is attached through an actuator servo 4 to drive the head 2 in a radial direction of the magnetic disc. Namely, this controller 3 controls head position information to drive and control the head 2 to deliver the head position information to the delay quantity controller 17 and the equalization characteristic controller 27.

The operation will now be described. Parallel input data is delivered to the P/S converter 11 through the

4

data bus 1. This P/S converter 11 converts parallel input data to serial data. The encoder 12 carries out, e.g., a PLL 2,7 code to generate record data series from the input data series. Namely, the pattern of the record data is formed as a pattern such that two bit information 0 are successive at the minimum and seven bit information 0 are successive at the maximum. This record data is delivered to the pattern detector 13 and the delay element 14.

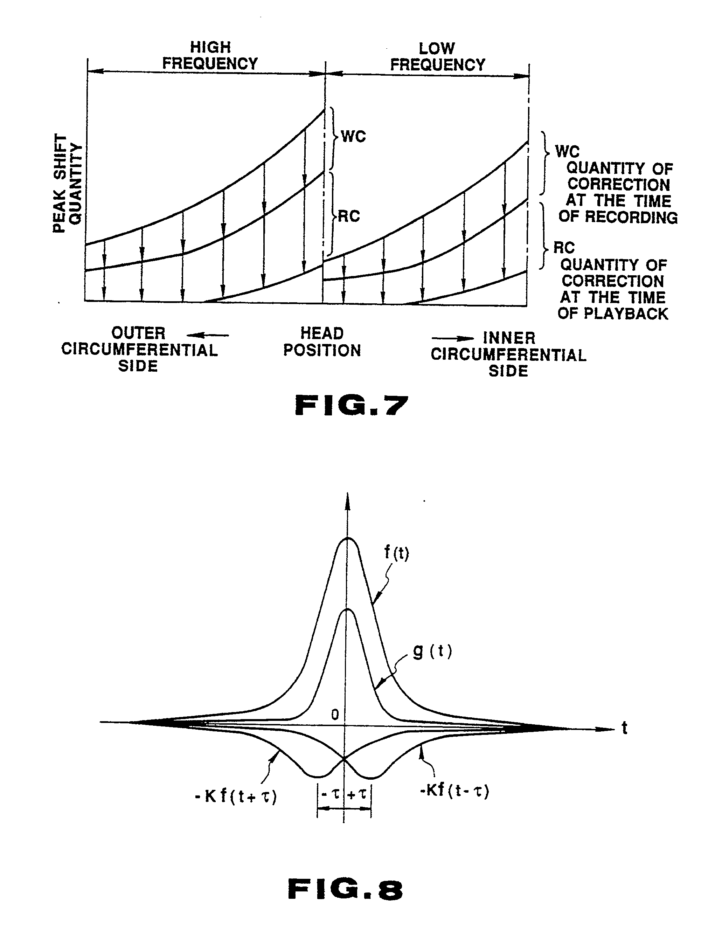

The delay quantity controller 17 controls delay quantities of the delay elements 14 and 15 on the basis of the head position information and the recording frequency from the controller 3. For example, a control is conducted such that delay quantities of the delay elements 14 and 15 become equal to delay quantities to correct a peak quantity WC corresponding to a head position as shown in FIG. 7. Namely, a control is conducted to allow delay quantities of the delay elements 14 and 15 to be larger according as the head position is located closer to the inner circumferential side in the high and low frequency areas of the recording frequency.

The pattern detector 13 discriminates the pattern of the record data to control the MUX 16. For example, when the pattern detector 13 detects a pattern "1001" including two successive zeros where the peak shift is produced to the maximum degree, it controls the MUX 16 so as to select an output from the delay element 15 in correspondence with the first bit information 1 of the pattern "1001", to select an output from the delay element 14 in correspondence with the two bit information succeeding thereto, and to select an output from the encoder 12 in correspondence with the bit information 1 succeeding thereto. Additionally, when the pattern detector 13 detects a pattern except for the pattern "1001" including two successive zeros, it controls the MUX 16 so as to select an output from the delay element 14.

The MUX 16 implements, e.g., NRZI modulation to data selected in a manner stated above to generate a recording signal to deliver this recording signal to the drive amplifier 18. This drive amplifier 18 modulates the direction of a magnetic field of the head 2 on the basis of the recording signal to record the modulated signal on the magnetic disc. Namely, magnetization of the recording medium of the magnetic disc is reversed in correspondence with the bit information 1 of the record data to record information.

Namely, according as the head 2 is positioned closer to the inner circumferential side of the magnetic disc, delay quantities of the delay elements 14 and 15 are caused to be larger. Further, when a pattern having a narrow interval between bit information 1 of record data where a peak shift generates to much degree is detected, record data from the encoder 12, and the delay elements 14 and 15 are selected as described above. Thus, the pulse width of the recording signal is narrowed, thus reducing a peak shift quantity of a playback due to intercode interference.

As stated above, in the recording system of the magnetic disc apparatus, an approach is employed to control the pulse width of a recording signal of the magnetic disc by the head position information and the pattern of record data, thereby making it possible to suppress the peak shift of the playback. Namely, peak shift correction corresponding to the head position and the pattern of the record data can be made. As a result, the peak shift quantity is reduced to much degree, thus making it possible to increase the phase margin to reduce the error rate of the magnetic disc apparatus.

The playback system of the magnetic disc apparatus will now be described.

The head 2 plays back a signal recorded as magnetization reversal of the recording medium of the magnetic disc. The playback amplifier 21 amplifies a signal from the head 2 to deliver the amplified playback signal to the equalizer 22.

The equalizer 22 is an equalizer of which equalization characteristic is changeable, and is a cosine equalizer which is a kind of transversal filters having a waveform equalization characteristic as shown in FIG. 8, for example. The equalization characteristic of this equalizer is as follows. Namely, when a single pulse of an input is represented by f(t), an output g(t) is expressed, by using the gain coefficient k and the delay time $\tau$, as follows :

$$g(t) = f(t) - k \left[ f(t + \tau) + f(t - \tau) \right]$$

The gain coefficient k and the delay time $\tau$ are controlled by the head position. Namely, head position information from the controller 3 is delivered to the equalization characteristic controller 27. This equalization characteristic controller 27 controls the gain coefficient k and the delay time $\tau$ on the basis of head position information. For example, a control is conducted to allow the delay time $\tau$ to be larger according as the width of an isolated wave in a playback signal becomes broader. Namely, the gain coefficient k and the delay time $\tau$ are varied on the basis of changes in the pulse interval depending upon the head position. In a practical sense, as shown in FIG. 7, a control is conducted such that the gain coefficient k and the delay time $\tau$ of the equalizer 22 become equal to a gain and a delay time to correct the peak shift quantity RC corresponding to the head position.

The waveform shaper 23 shapes an equalized waveform to detect, e.g., a peak position to generate a detection pulse indicative of presence and absence of a signal. The discriminator 24 plays back a playback pulse from the detection pulse by using a clock from, e.g., so called a SYNC signal generator. The decoder 25 decodes a RLL 2,7 code to play back serial playback data. The S/P converter 26 converts serial playback data to parallel data to output it to the data bus 1.

As stated above, in the playback system of the magnetic disc apparatus, an approach is employed to control the equalization characteristic of the equalizer by using a pulse interval, i.e., head position information, thereby making it possible to carry out a peak shift correction corresponding to the head position. As a result, the peak shift quantity is decreased to much extent, thus making it possible to increase the phase margin, and to reduce the error rate of the magnetic disc apparatus.

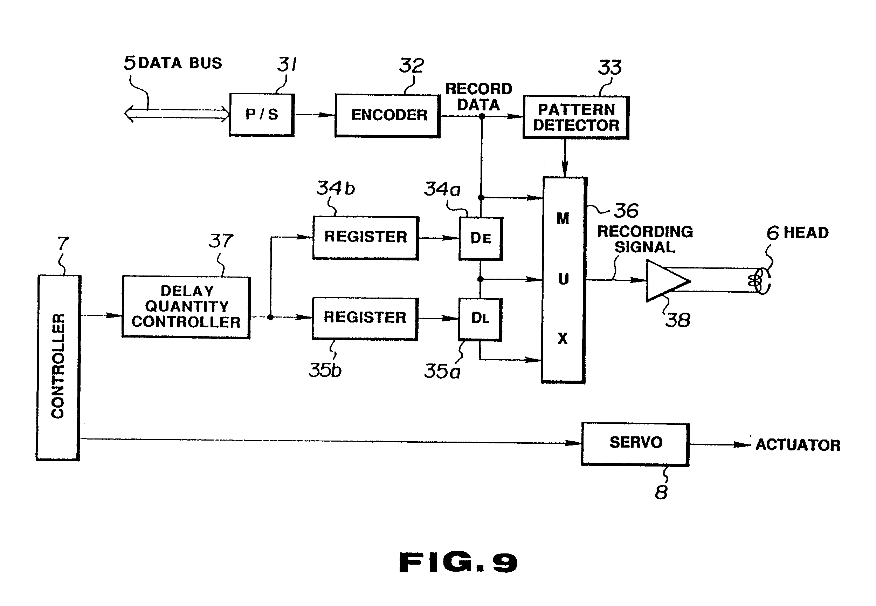

A second embodiment of a magnetic disc recording apparatus according to this invention will now be described. Fig. 9 is a circuit diagram showing, in a block form, the recording system of a magnetic disc apparatus to which this invention is applied.

In FIG. 9, the recording system of the magnetic disc apparatus comprises a P/S converter 31 for converting parallel input data inputted through a data bus 5 to serial data, an encoder 32 for converting the serial data to, e.g., RLL 2,7 code, a pattern detector 33 for discriminating a pattern of the record data converted to RLL 2,7 code to control a MUX 36, two delay elements 34a and 35a having a variable delay quantity connected in series for delaying the record data converted to RLL 2,7 code, the MUX 36 for selecting one data from data from the encoder 32 and the delay elements 34a and 35a to allow the selected data to be subjected to, e.g., NRZI modulation to use it as a recording signal, a drive amplifier 38 for driving the head 6 by the recording signal, a delay quantity controller 37 for controlling delay quantities of the delay elements 34a and 35a on the basis of head position information from the controller 7, respectively, and registers 34b and 35b for storing set values of delay quantities individually set from the delay quantity controller 37 in order to deliver them to the delay elements 34a and 35a, respectively.

In this embodiment, the controller 7 has a function to drive and control an actuator to which the head 6 is attached through an actuator servo 8 to drive the head 6 in a radial direction of the magnetic disc. Namely, this controller 7 controls head position information to drive and control the head 6 to deliver the head position information to the delay quantity controller 37.

The operation will now be described. Parallel input data is delivered to the P/S converter 31 through the data bus 5. This P/S converter 31 converts parallel input data to serial data. The encoder 32 carries out, e.g., a PLL 2,7 code conversion to generate record data series from the input data series. Namely, the pattern of the record data is formed as a pattern such that two bit information 0 are successive at the minimum and seven bit information 0 are successive at the maximum. This record data is delivered to the pattern detector 33 and the delay element 34a.

The delay quantity controller 37 controls delay quantities of the delay elements 34a and 35a on the basis of the head position information and the recording frequency from the controller 7 through registers 34b and 35b, respectively. For example, a control is conducted such that a total delay quantity of delay quantities of the delay elements 34a and 36a becomes equal to a delay quantity to correct a peak quantity WC corresponding to a head position as shown in FIG. 7. Namely, a control is conducted to allow the total quantity of delay quantities of the delay elements 34a and 35a to be larger according as the head position is located closer to the inner circumferential side in the high and low frequency areas of the recording frequency. In a practical sense, the delay quantity of the delay circuit 34a is set to a value to correct the above-described peak shift quantity $P_L$ shown in FIG. 5, and the delay quantity of the delay circuit 34a is set to a value to correct the above- described peak shift quantity $R_E$ shown in FIG. 5.

The pattern detector 33 discriminates the pattern of the record data to control the MUX 36. For example, when the pattern detector 33 detects a pattern "1001" including two successive seros where the peak shift is produced to the maximum degree, it controls the MUX 16 so as to select an output from the delay element 35a in correspondence with the first bit information 1 of the pattern "1001", to select an output from the delay element 34a in correspondence with the two bit information 0 succeeding thereto, and to select an output from the encoder 32 in correspondence with the bit information 1 succeeding thereto. Additionally, when the pattern detector 33 detects a pattern except for the pattern "1001" including two successive zeros, it controls the MUX 16 so as to select an output from the delay element 34a.

The MUX 36 implements, e.g., NRZI modulation to data selected in a manner stated above to generate a recording signal to deliver this recording signal to the drive amplifier 38. This drive amplifier 38 modulates the direction of a magnetic field of the head 6 on the basis of the recording signal to record the modulated signal on the magnetic disc. Namely, magnetization of the recording medium of the magnetic disc is reversed in correspondence with the bit information 1 of the record data to record information.

Namely, according as the head 6 is positioned closer to the inner circumferential side of the magnetic disc, delay quantities of the delay elements 34a and 35a are caused to be larger, and the delay quantity of the delay element 35a is caused to be larger than the delay quantity of the delay element 34a. Further, when a pattern having a narrow interval between bit information 1 of record data where a peak shift generates to much degree is detected, record data from the encoder 32, and the delay elements 34a and 35a are selected as described above. Thus, the pulse width of the recording signal is narrowed, thus reducing a peak shift quantity of a playback due to intercode interference, and to cope with a difference between peak shift quantities at the preceding and succeeding change positions of pulses of the recording signal.

As stated above, in this embodiment, an approach is employed to control the pulse width of a recording signal of the magnetic disc by the head position information and the pattern of record data, and to cope with a difference between peak shift quantities at the preceding and succeeding change positions of pulses of a recording signal, thereby making it possible to suppress to more properly the peak shift of the playback. Namely, peak shift correction corresponding to the head position, the pattern of the record data, and a difference between peak shift quantities at the preceding and succeeding positions of pulses of a recording signal can be made. As a result, the peak shift quantity is reduced to more properly, thus making it possible to increase the phase margin to further reduce the error rate of the magnetic disc apparatus.

It is to be noted that this invention is not limited to the above-described embodiment, but an approach may be employed to respectively correct peak shifts in dependency upon the head position, etc. also in the magnetic disc recording apparatus and the magnetic disc playback apparatus in which the recording system and the playback system of the magnetic disc apparatus are separate with each other. Further, it is also to be noted that the coding rule used in the magnetic disc apparatus is not limited to the above-described RLL 2,7 code.

As is clear from the foregoing description, in the magnetic disc recording apparatus according to this invention, an approach is employed to control the pulse width of a recording signal of the magnetic disc on the basis of the head position and the pattern of record data, thereby making it possible to decrease a peak shift quantity of a playback signal due to the intercode interference to increase the phase margin. As a result, a magnetic disc recording apparatus having a low error rate can be provided.

Further, in a magnetic disc recording apparatus according to this invention, an approach is employed to cope with a difference between peak shift quantities at preceding and succeeding change positions of pulses of a recording signal in addition to the above-described approach, thereby making it possible to carry out a more proper peak shift correction. As a result, a magnetic disc recording apparatus having a lower error rate can be provided.

In addition, in the magnetic disc playback apparatus according to this invention, an approach is employed to control the equalization characteristic of the equalizer on the basis of the head position, thereby making it possible to decrease a peak shift quantity of a playback signal due to the intercode interference to increase the phase margin. As a result, a magnetic disc playback apparatus having a low error rate can be provided.

## Claims

1. A magnetic disc recording apparatus comprising :
   a head for recording signals on a magnetic disc,
   head position control means for controlling a position in a disc radial direction of said head,
   pattern detection means for detecting a pattern of record data in which a peak position of a playback signal shifts, and
   pulse width control means for controlling a pulse width of a recording signal delivered to said head in dependency upon head position information from said head position control means and pattern information from said pattern detection means,
   to control a pulse width of a recording signal by said pulse width control means, thus to suppress a peak shift of a playback signal.

2. A magnetic disc recording apparatus as set forth in claim 1, wherein said pulse width control means carries out a control to allow a pulse width of the recording signal to be narrower according as the head position becomes closer to the inner circumferential side on the basis of head position information from said head position control means so that a peak shift quantity of a playback signal is reduced with respect to record data of a pattern that a peak shift detected by said pattern detection means generates.

3. A magnetic disk recording apparatus as set forth in claim 1, wherein said pulse width control means carries out a control to allow a pulse width of the recording signal to be narrower to individually effect a control to delay the preceding change position of pulses of the recording signal and to advance the succeeding change position thereof according as the head position becomes closer to the inner circumferential side on the basis of head position information from said head position control means so that a peak shift quantity of a playback signal is reduced with respect to record data of a pattern that a peak shift detected by said pattern detection means generates.

4. A magnetic disc playback apparatus comprising :

a head for playing back signals from a magnetic disc,

an equalizer in which an equalization characteristic for carrying out waveform equalization of a playback signal from said head is changeable,

head position control means for controlling a position in a disc radial direction of said head, and equalization characteristic control means for controlling said equalizer so that a peak shift quantity of said playback signal is decreased in dependency upon head position information from said head position control means.

FIG.1

FIG.2

FIG.3

EP 0 433 165 A1

FIG.4

FIG.5

10

FIG.6

**FIG.7**

**FIG.8**

**FIG. 9**

EP 0 433 165 A1

**European Patent Office**

# EUROPEAN SEARCH REPORT

Application Number

| | DOCUMENTS CONSIDERED TO BE RELEVANT | | EP 90403535.9 |
|---|---|---|---|

| Category | Citation of document with indication, where appropriate, of relevant passages | Relevant to claim | CLASSIFICATION OF THE APPLICATION (Int. Cl.5) |
|---|---|---|---|
| A | EP - A2 - 0 235 600 (IBM) * Abstract * | 1,4 | G 11 B 21/10 G 11 B 5/596 |
| A | EP - A2 - 0 329 846 (IBM) * Fig. 7; abstract * | 1,4 | |
| A | US - A - 4 873 680 (CHUNG et al.) * Abstract * | 1,4 | |
| | | | **TECHNICAL FIELDS SEARCHED (Int. Cl.5)** |
| | | | G 11 B 21/00 G 11 B 7/00 G 11 B 5/00 |

The present search report has been drawn up for all claims

| Place of search | Date of completion of the search | Examiner |
|---|---|---|
| VIENNA | 18-02-1991 | BERGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)